# EUROPEAN PATENT APPLICATION

(11) **EP 2 704 051 A2**
(43) Date of publication of application: **05.03.2014**
(21) Application number: 13181891.6
(22) Date of filing: 27.08.2013
(51) Int. Cl.: G06F 21/10

(54) **Method of protecting and managing digital contents and apparatus thereof**

(30) Priority: 27.08.2012 KR 20120093952
(71) Applicant: Samsung Electronics Co., Ltd, Gyeonggi-do 443-742 (KR)
(72) Inventor: Lim, Yeunwook, 443-742 Gyeonggi-do (KR)
(74) Representative: Jenkins, Richard Gavin

(57) **Abstract**

A method and an apparatus for protecting and managing digital contents are provided. The method of protecting and managing digital contents includes receiving the digital contents, determining whether the digital contents are secure contents whose use is limited, and storing secure contents in a secure memory which is refreshed at a life cycle of a predetermined period when the digital contents are the secure contents.

## Description

### BACKGROUND OF THE INVENTION

### 1. Field of the Invention:

The present invention relates to a method and apparatus for protecting and managing digital contents. More particularly, the present invention relates to a method of protecting and managing digital contents using a volatile secure storage, and an apparatus thereof.

### 2. Description of the Related Art:

In recent years, as a network technology has been rapidly developed, and various digital contents, for example, music, video, games, software, and document information have been commonly used, a number of users utilizing the digital contents has been increased. Accordingly, to prevent illegal copy and redistribution of paid contents used in a portable terminal, a technology of protecting and managing digital contents has been developed.

Particularly, recently, Digital Rights Management (DRM) has been suggested as a technology to prevent illegal copying of digital contents and to protect copyrighted material. The DRM is a technology of encrypting various digital contents such as documents, music files, video files, and video games, etc. This technology of protecting a right of a copyrighted product applies use rights. The DRM provides a series of protecting and managing systems where the digital contents are created and published, distributed, and used.

In detail, a DRM system includes played contents and a license of the contents. The license refers to a type of encrypted use right determining a presence of a playback of the contents. Accordingly, if a user downloads paid contents, the portable terminal stores contents including a license and may play the contents based on a corresponding license. That is, in the DRM system, contents (hereinafter referred to as 'DRM contents') to which the license is applied are always encrypted so that only authenticated users may use the corresponding contents. Accordingly, even if the DRM contents are copied, the DRM system may control non-authenticated users to prevent the contents from being illegally copied.

Since the DRM system is a proprietary technology of a specific company, a different technology is required. Particularly, there are various technologies for a DRM system, but technologies used in a real contents market are restrictive. However, in the real contents market, only one playback technology and only timed constraint playback technology which can be used for a specific time are mainly required. Accordingly, in a case of using DRM to secure and manage contents stored in the portable terminal, resources may be unnecessarily consumed. Accordingly, in a portable terminal requiring resource management, a DRM system is inconvenient.

Accordingly, there is a need for a method capable of easily protecting and using digital contents without using a DRM system.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method of protecting and managing digital contents using a volatile secure storage, and an apparatus thereof.

Another aspect of the present invention is to provide a method of protecting and managing digital contents, capable of implementing one playback function and a predetermined period playback function of the digital contents, by storing secure contents in a volatile secure storage which is periodically refreshed, and an apparatus thereof.

Another aspect of the present invention further provides a method of protecting and managing digital contents capable of controlling a playback possible time and a number of times of playbacks of corresponding contents by storing and managing secure contents through a volatile secure storage, and an apparatus thereof.

In accordance with an aspect of the present invention, a method of protecting and managing digital contents is provided. The method includes receiving at least one digital contents, determining whether the at least one digital contents are secure contents whose use is limited, and storing the secure contents in a secure memory which is refreshed at a lift cycle of a predetermined period when the at least one digital contents are the secure contents.

In accordance with another aspect of the present invention, an apparatus for protecting and managing digital contents is provided. The apparatus includes a radio frequency communication unit processing at least one digital contents and data associated with contents related information, a secure memory storing secure contents whose use is limited among the digital contents, a general memory storing general contents whose use is not limited among the digital contents and life period information of the secure memory, and a controller determining whether the contents are the secure contents or the general contents, acquiring playback right information of the secure contents, creating a storage section in which the contents are stored in the secure memory based on the playback right information.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of an apparatus for protecting and managing digital contents according to an exemplary embodiment of the present invention;

FIG. 2 is a flowchart illustrating a method of storing digital contents according to an exemplary embodiment of the present invention;

FIG. 3 is a flowchart illustrating a method of storing and managing digital contents according to an exemplary embodiment of the present invention;

FIG. 4 is a flowchart illustrating a method of managing digital contents according to an exemplary embodiment of the present invention;

FIG. 5 is a flowchart illustrating a method of protecting digital contents according to an exemplary embodiment of the present invention; and

FIG. 6 is a flowchart illustrating a method of protecting and managing digital contents according to another exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

As used herein, the term "secure contents" refers to contents whose use is limited, that is, paid contents. The secure contents may include contents having only a predetermined number of times of playback right, and contents capable of being played for a predetermined time.

As used herein, the term "contents" refers to contents whose use is not limited, that is, free contents. The normal contents may include contents capable of being used in a portable terminal regardless of the number of times of playbacks and a playback period.

As used herein, the term "secure memory" refers to a volatile secure storage having a life period, which refers to a storage having a refresh attribute deleting stored data when a predetermined time elapses or a specific situation occurs. The secure memory is divided into a plurality of storage sections to be operated. The secure memory has an attribute capable of delaying deletion of data according to a refresh request when stored data are used.

As used herein, the term "general memory" refers to a storage having no life period, which refers to a storage having no refresh attribute.

As used herein, the term "secure information" refers to contents use playback authority information. The secure information may include the number of times of playbacks and a playback period.

As used herein, the term "life period" refers to a period where the secure memory is periodically refreshed.

As used herein, the term "refresh" refers to a series of operations of deleting data stored in the secure memory.

It will be apparent that a method and an apparatus according to the present invention may include a mobile communication terminal, a smart phone, a Personal Digital Assistant (PDA), and a smart TV capable of using digital contents requiring security. However, it is noted that the method and apparatus is not limited to those described above and can include other types of methods and apparatuses.

Hereinafter, for the purpose of description, the exemplary embodiment will be made on the assumption that a portable terminal performing a function according to the exemplary embodiment of the present invention is a mobile communication terminal, but the present invention is not limited thereto.

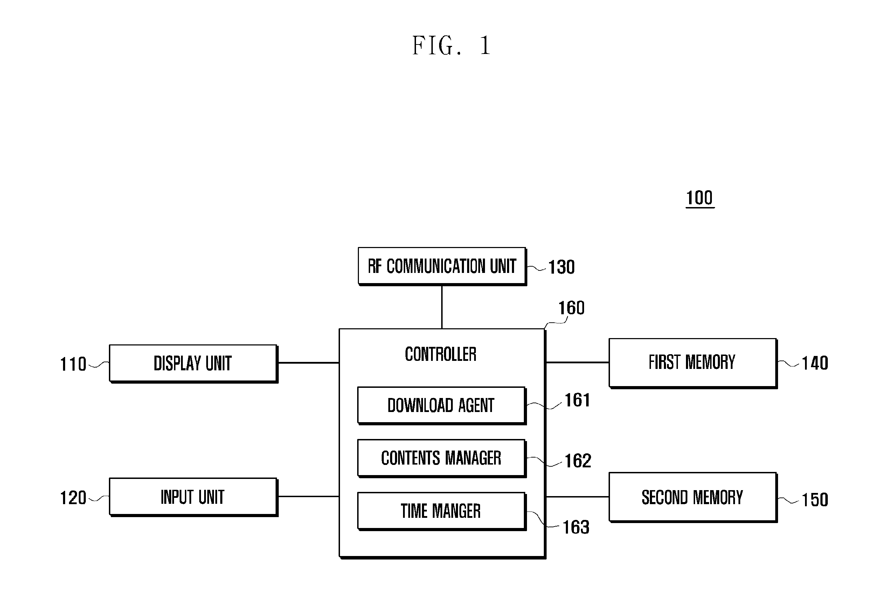

FIG. 1 is a block diagram illustrating a configuration of an apparatus for protecting and managing digital contents according to an exemplary embodiment of the present invention.

Referring to FIG. 1, the portable terminal 100 may include a display unit 110, an input unit 120, a Radio Frequency (RF) communication unit 130, a first memory 140, a second memory 150, and a controller 160.

The display unit 110 displays information input by a user or information provided to the user as well as various menus of the portable terminal 100. The display unit 110 may provide various screens according to the use of the portable terminal 100. The display unit 110 may provide an idle screen, a menu screen, a message creation screen, a call screen, a game screen, a music playback screen, and a moving image playback screen. The display unit 110 may be configured, for example, by a flat panel display such as a Liquid Crystal Display (LCD), an Organic Light Emitted Diode (OLED), or an Active Matrix Organic Light Emitted Diode (AMOLED).

When the LCD or the OLED is configured by a touch screen, the display unit 110 may be included in an input apparatus. When the display unit 110 is configured by a touch screen in the portable terminal 100, the display unit 110 may include a touch panel (not shown) detecting a touch operation. The touch panel may convert pressure applied to a specific region of the display unit 110 or variation in capacitance generated in the specific region of the display unit 110 into an electric input signal. The touch panel may include a resistive type touch panel, a capacitive type touch panel, an electromagnetic induction type touch panel, and a pressure type touch panel. The touch panel may detect pressure of touch as well as a touched position and area. When there is a touch input for the touch panel, the touch panel transmits a corresponding input signal to the controller 130. Accordingly, the controller 130 may check touch input information of a user from the input signal to perform corresponding functions.

The input unit 120 may include a module associated with an input of the portable terminal 100. The input unit 120 may receive and transfer a signal and various character information associated with setting and control of functions of the portable terminal 100 to the controller 160. The input unit 120 may be configured by one or a combination of input elements such as a touch pad, a touch screen, a key pad of a general key array, a QWERTY type key pad, and a function key set to perform a specific function according to a setting of the portable terminal 100. The RF communication unit 130 performs communication of the portable terminal 100. The RF communication unit 130 may form a preset communication channel with a supportable mobile communication network to perform communication such as voice communication, video communication, and data communication. The RF communication unit 130 may include an RF transmitter (not shown) up-converting a frequency of a transmitted signal and amplifying the signal, an RF receiver (not shown) low-noise-amplifying a received signal and down-converting the signal.

Particularly, the RF communication unit 130 may perform a transceive function such as a purchase of at least one contents in cooperation with an external server (e.g., contents server). The RF communication unit 130 may download contents requiring security and information necessary to play the contents from the external server under control of the controller 160. The RF communication unit 130 may transmit a request for purchase of paid contents to the external server and may receive a response and contents information in response to a request from the external server under control of the controller 160. The RF communication unit 130 may transceive contents, attribute information associated with the contents, and a message for acquiring security information in cooperation with an external network. In particular, the RF communication unit 130 may perform communication associated with transceiving a message or a file (e.g., contents download request message, contents download response message, HTTP request message, HTTP response message) associated with acquisition of security information.

Further, the RF communication unit 130 may include a mobile communication module (e.g., third Generation (3G) mobile communication module, 3.5-Generation (3.5G) mobile communication module, fourth Generation (4G) mobile communication module, or the like), a near distance mobile module (e.g., Wireless Fidelity (Wi-Fi) module), and a Digital Broadcasting Mode (e.g., DMB module).

The first memory 140 is a general storage having no life period, and may store an operating system and various applications (referred to as 'App') of the portable terminal 100, and various data. The first memory 140 may store various data generated by the portable terminal 100. The data may include data generated through execution of an App of the portable terminal and various types of storable data generated using the portable terminal or received from the exterior (e.g., external server, other portable terminal, PC). Particularly, the data may store various preset information on a user interface provided from the portable terminal and a processing of the portable terminal function, including general contents.

Further, the first memory 140 may store an application program necessary for a function operation. The first memory 140 may store an OS for booting the portable terminal 100 and an application program necessary for a call function, a moving image or music playback function, an image display function, and a camera shooting function under control of the controller 160. In addition, the first memory 140 may store an application program necessary for a broadcasting viewing function, an audio recording function, a calculator function, and a schedule management function. The first memory 140 may store contents requiring no security (e.g., free contents, general contents whose use is not limited). Particularly, the first memory 140 may store life period information of storage sections stored in the second memory 150.

The second memory 150 may store secure contents (e.g., paid contents, secure contents whose use is limited) among contents stored in the portable terminal 100. Particularly, the second memory 150 may store contents requiring management of a digital contents authority. If a specific situation such as lapse of a specific time or termination of App occurs, the second memory 150 may have an attribute deleting data stored in a secure storage, an attribute capable of not copying data stored in a storage, an attribute capable of varying a life period of the storage, and an attribute delaying deletion of data when data stored in the storage is used.

The second memory 150 may include a plurality of volatile secure storages, that is, storage sections. When downloading contents, the storage sections may be created under control of the controller 160. Further, when an application program is downloaded, a storage section corresponding to an application may also be created.

The controller 160 may control an overall operation and signal flow between internal constituent elements of the portable terminal 100, and may process data. The controller 160 may control power supply from a battery to the internal constituent elements. Further, the controller 160 may execute various Apps stored in a memory.

The controller 160 may control a series of operations associated with execution of a function. The controller 160 may request download of contents and receive the contents through the RF communication unit 130. If the contents are downloaded, the controller 160 may analyze a header of the contents to determine whether corresponding contents are general contents or secure contents. When the corresponding contents are the general contents, the controller 160 may store the corresponding contents in a first memory 140. When the corresponding contents are the secure contents, the controller 160 may extract security information from a header of the corresponding contents. The controller 160 may store the corresponding contents in a second memory 150 based on the extracted security information. The controller 160 may manage refresh time setting of the second memory 150 in order to keep and play the contents stored in the second memory 150.

For example, when the corresponding contents are the secure contents, the controller 160 may acquire playback right information of the corresponding contents such as the number of times of playbacks and a playback period from the extracted security information. The controller 160 may set a life period of the second memory 150 storing the contents based on the extracted security information.

The controller 160 may include a download agent 161, a contents manager or processor 162, and a time manager 163 for the above control operation.

The download agent 161 connects with a corresponding network to perform functions associated with download of contents in response to a download request of the contents.

The download agent 161 may transmit a download request message to a corresponding network and may process a corresponding receiving operation. The download agent 161 may analyze downloaded contents to determine whether the downloaded contents are general contents or secure contents. For example, the download agent 161 may analyze a header of contents to determine whether corresponding contents are secure contents. The download agent 161 may analyze corresponding contents and may transfer corresponding contents and analysis information to a contents processor.

When the corresponding contents are the general contents, the contents processor 162 may store the corresponding contents in the first memory 140. When the corresponding contents are the secure contents, the contents processor 162 may store the corresponding contents in the second memory 150. Particularly, the contents processor 162 may extract security information from a header of the secure contents, and may manage a storage section to which the secure contents will be stored based on the extracted security information. The contents processor 162 may create a storage section or set a life period of the storage section based on the security information.

The time manager 163 may manage a refresh time of storage sections created in the second memory 150. For example, if a life period termination signal of the storage sections is detected, the time manager 163 may generate a refresh request signal indicating deletion of data stored in a corresponding storage section and transfer the refresh request signal to the contents processor 162. Accordingly, the contents processor 162 may delete contents stored in a corresponding storage section according to a refresh request signal.

Since the structural elements can be variously changed according to convergence trend of a digital apparatus, not all such elements may be listed here. However, the portable terminal 100 according to an exemplary embodiment of the present invention may further include configurations that are not mentioned such as a sensor module for detecting information associated with location variation of the portable terminal 100, a GPS module for measuring a location of the portable terminal 100, and a camera module. Specific constituent elements can be excluded from the portable terminal 100 or the terminal 100 may be substituted by specific configurations in the foregoing arrangements according to the provided form or another structure. In addition, the input unit 120 may include a touch pad and a track ball in addition to a touch screen and a key input unit.

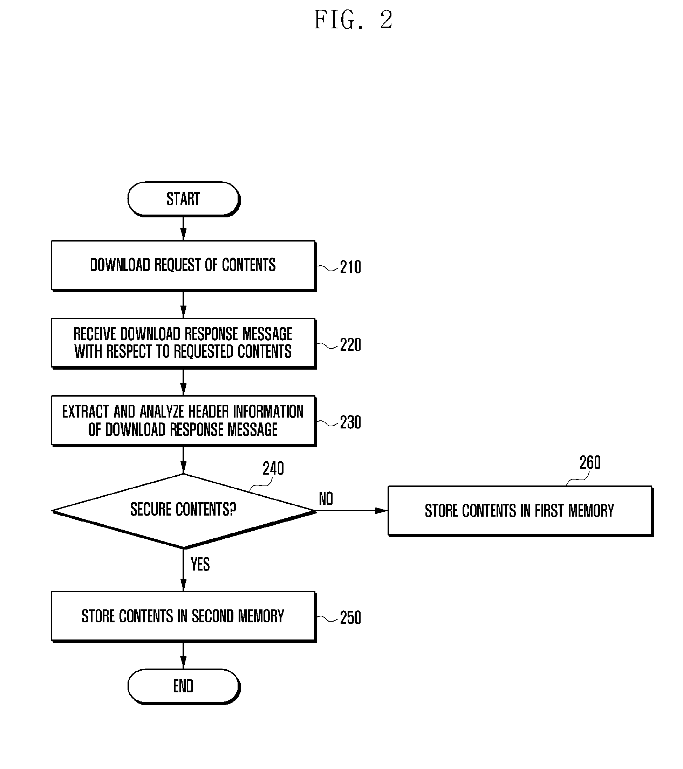

FIG. 2 is a flowchart illustrating a method of storing digital contents according to an exemplary embodiment of the present invention.

Referring to FIG. 2, the controller 160 detects an input of a user associated with a download request of specific contents in step 210. In detail, if a request of a user for the download of contents is detected, the controller 160 may control the download agent 161 to connect with a corresponding network corresponding to specific contents. The download agent 161 may transmit a download request message requesting download with the specific contents to the corresponding network. Accordingly, the corresponding network may transmit a download response message corresponding to the download request of the contents to the portable terminal 100.

The controller 160 may receive a download response message for the requested contents in step 220. The download response message may be received while including the requested contents. The download response message may be classified into a header field and a body field. The body field may include corresponding contents data whose download is requested. A header of a response message may include attribute information and secure data with respect to corresponding contents. In detail, the header field may include Identification information (ID) for identifying a corresponding network, contents type information indicating contents type included in a message body, and attribute information such as a contents length. Further, in a case of contents requiring security, a header field may include information on a use limitation of contents such as contents secure information, for example, a contents playback period and the playback number of contents.

The controller 160 may extract and analyze header information of the download response message in step 230. In this case, the header may be an HTTP header or a header of a contents file. In this case, the header information may include secure information as well as attribute information. The secure information may be included in a header of a response message, but may be provided as a separate file from contents. The secure information is acquired from a network server of downloaded contents, and may be included in secure contents whose use is limited, that is, paid contents. For example, the secure information is not included in general contents whose use is not limited or free contents. However, the secure information may be included in only secure contents whose use is limited or paid contents.

The controller 160 may determine whether corresponding contents are secure contents based on the extracted header information in step 240. For example, when secure information, that is, use limitation is included in the header information, the controller 160 determines the corresponding contents as the secure contents. When secure information, that is, use limitation is not included in the header information, the controller 160 determines the corresponding contents as the general contents.

If the corresponding contents are secure contents whose use is limited, the controller 160 may store and manage the contents in a second memory 150 having a life period in step 250. In this case, the controller 150 may store the corresponding contents in a storage section having a section ID corresponding to an ID of contents. If a specific situation such as lapse of a specific time or termination of App occurs, the second memory 150 may have an attribute deleting data stored in a secure storage, an attribute capable of not copying data stored in a storage, an attribute capable of varying a life period of the storage, and an attribute delaying deletion of data when data stored in the storage is used.

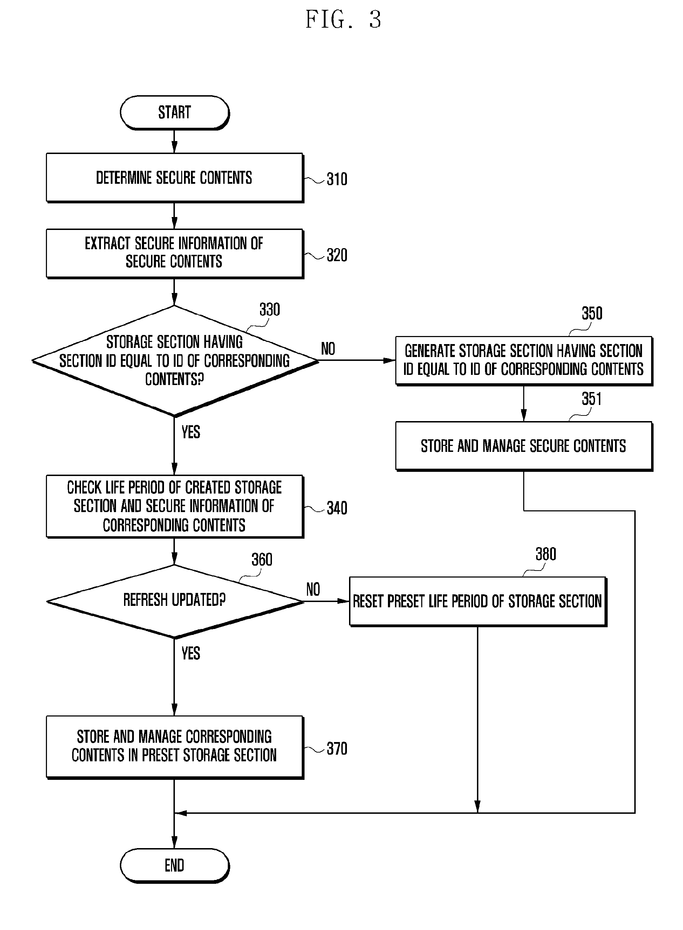

If the corresponding contents are general contents whose use is not limited, the controller 160 may store and manage the contents in a first memory 150 in step 260. Hereinafter, a method of storing and managing the secure contents in the first memory will be described in detail with reference to FIG. 3.

FIG. 3 is a flowchart illustrating a method of storing and managing digital contents according to an exemplary embodiment of the present invention.

Referring to FIG. 3, a controller 160 may analyze and determine downloaded contents as secure contents whose use is limited in step 310. The controller 160 may extract secure information from a header of the secure contents in step 320. For example, the controller 160 may check information on an ID, a playback period, and a number of playback times of corresponding contents from the secure information. In this case, the ID of the contents may be used as a reference section ID in order to identify storage sections in which corresponding contents will be stored. Further, the information on the playback period and the number of playback times may be used as reference information to set life periods of storage sections. The life period indicates a period from a storage time point of data in the storage section to a time point of deletion of the data. The life period may be set based on a playback period and the number of playback times of use right information stored in corresponding contents, and may be changed according to the corresponding contents.

The controller 160 may determine whether a storage section having a section ID equal to an ID of the corresponding contents is stored in a second memory 150 in step 330. The ID of the contents may be a file name of contents, and a name of a server downloading the contents or a contents execution App.

The controller 160 may create a plurality of volatile storage sections by types of contents in the second memory 150. The controller 160 may set the volatile storage sections to have section ID equal to an ID of contents stored in the created storage section. Accordingly, a plurality of storage sections created in the second memory may be managed based on an ID of contents, and may be separately operated for each storage section. That is, the storage section may be controlled by respective applications (application corresponding to section ID) or an OS.

When the storage section having a section ID equal to an ID of the corresponding contents is stored in the second memory 150, the controller 160 may check a life period of the created storage section and secure information of corresponding contents in step 340.

When the storage section having a section ID equal to an ID of the corresponding contents is not stored in the second memory 150, the controller 160 may generate a storage section having a section ID equal to an ID of corresponding contents in step 350. In this case, a life period for the storage section may be set based on a playback period and the number of times of playbacks of use right information in the corresponding contents.

The controller 160 may store and manage secure contents in the created storage section in step 351. For example, it is assumed that the playback period of corresponding contents is 30 days. Accordingly, the controller 160 sets the life period of the generated contents to 30 days. If 30 days elapse after the storage section is created, the controller 160 may generate a refresh signal indicating deletion of data stored in a corresponding storage section. Accordingly, the controller 160 may delete data stored in a memory according to generation of a refresh signal.

The controller 160 may determine whether presence of generation of a refresh signal of the created storage section is updated in step 360. The controller 160 compares a life period of the created storage section with a playback period and the number of times of playbacks of corresponding contents to determine whether to update a refresh time of a corresponding storage section. For example, when a refresh time due to a life period of the created storage section is different from a playback period of corresponding contents, the controller 160 may request update of a refresh time of the created storage section. When a refresh time due to a life period of the created storage section is the same as the playback period of corresponding contents, the controller 160 may not update a refresh time of the created storage section.

If the update of the refresh time is requested, the controller 160 may reset the preset life period of the storage section in step 370. Accordingly, a new life period is applied to the storage section so that a refresh time according to a corresponding life period may be changed. The controller 160 may store and manage corresponding contents in a storage section to which a life period is reset. In this case, the contents are stored in a storage section during a reset life period. When the reset life period is terminated, the refresh request signal may be generated and deleted.

When the update of the refresh time is not requested, the controller 160 may store and manage corresponding contents in a preset storage section in step 380. In this case, the contents are stored in a storage section during a preset life period of the storage section, and a refresh request signal may be generated and deleted when the corresponding life period is terminated.

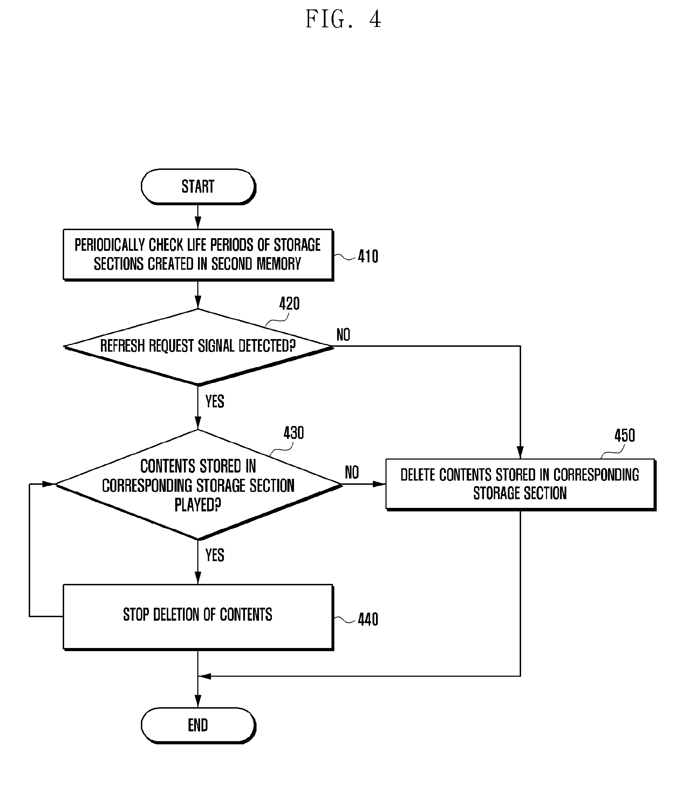

FIG. 4 is a flowchart illustrating a method of managing digital contents according to an exemplary embodiment of the present invention.

Referring to FIG. 4, a controller 160 may periodically check life periods of storage sections created in the second memory 150 in step 410. The controller 160 may determine whether life periods of storage sections are terminated through a time manager 163 in step 420. When the life periods of the storage sections are terminated, the controller 160 may generate a refresh request signal indicating deletion of data stored in a corresponding storage section. If the refresh request signal is detected at step 420, the controller 160 may determine whether contents stored in a corresponding storage section is played in step 430. When the contents stored in a corresponding storage section is played, the controller 160 may stop deletion of contents until the playback of the contents is terminated in step 440. When the contents stored in a corresponding storage section is not played, the controller 160 may delete contents stored in a corresponding storage section in response to the refresh request signal in step 450.

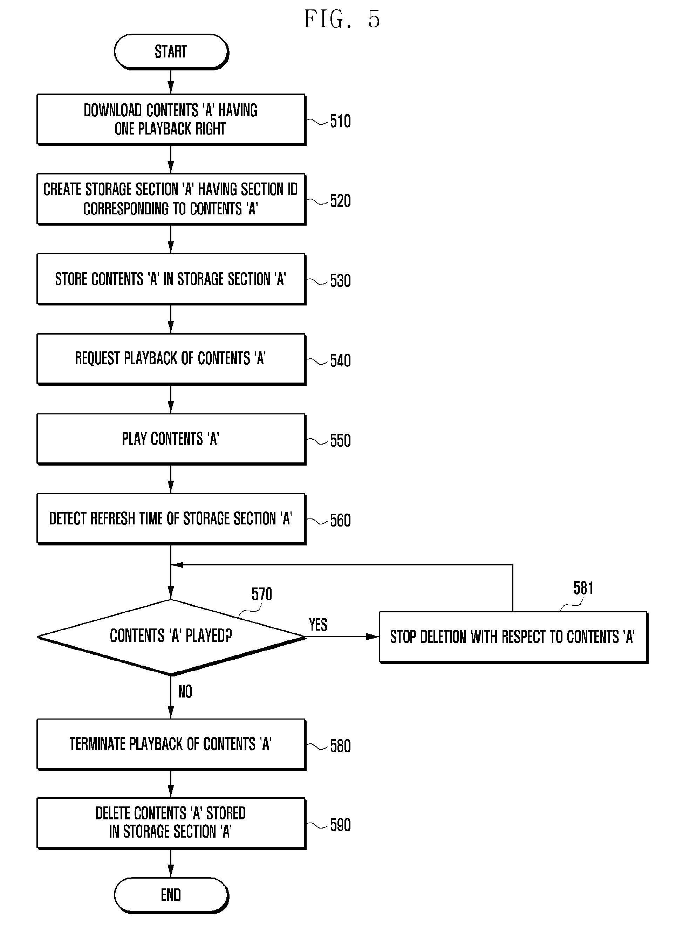

FIG. 5 is a flowchart illustrating a method of protecting digital contents according to an exemplary embodiment of the present invention. Particularly, FIG. 5 is a flowchart illustrating a method of managing storage and playback of digital contents having one playback period.

Referring to FIG. 5, a controller 160 may receive contents 'A' through a corresponding network in response to a download request of contents from the user in step 510. In this case, the contents 'A' may be contents having only one playback right from a server providing corresponding contents. The controller 160 may extract playback right information from header information of contents 'A'.

The controller 160 creates a storage section 'A' having a section ID corresponding to the contents 'A' in step 520. In this case, a life period of the storage section 'A' is set to have a life period of one second simultaneously with playback start of the contents based on one playback right information.

The exemplary embodiment will be made on the assumption that ID of the corresponding contents does not have a storage section having the same ID. Since the creation of the storage section was described in FIGS. 2 and 3, a detailed description thereof is omitted.

The controller 160 stores the contents 'A' in the created storage section 'A' in step 530. The controller 160 detects an input of a user requesting playback of the contents 'A' by the user in step 540. The controller 160 may play the contents 'A' stored in the storage section 'A' in step 550. The controller 160 checks that playback of the contents 'A' starts and checks that a life period of the storage section 'A' is one second to detect a refresh request signal in step 560.

The controller 160 may determine whether the contents 'A' are played in step 570. The controller 160 may check that playback of the contents 'A' are terminated in step 580. When the playback of the contents 'A' are terminated, the controller 160 may delete the contents 'A' in response to the refresh request signal in step 590. When the contents 'A' is played, the controller 160 may stop deletion for the contents 'A', and may determine whether the playback of the contents is terminated in step 581.

As described above, according to the exemplary embodiment of the present invention, a contents protecting system capable of performing only one playback using a volatile secure storage may be implemented without using a digital copyright management system using contents and right objects.

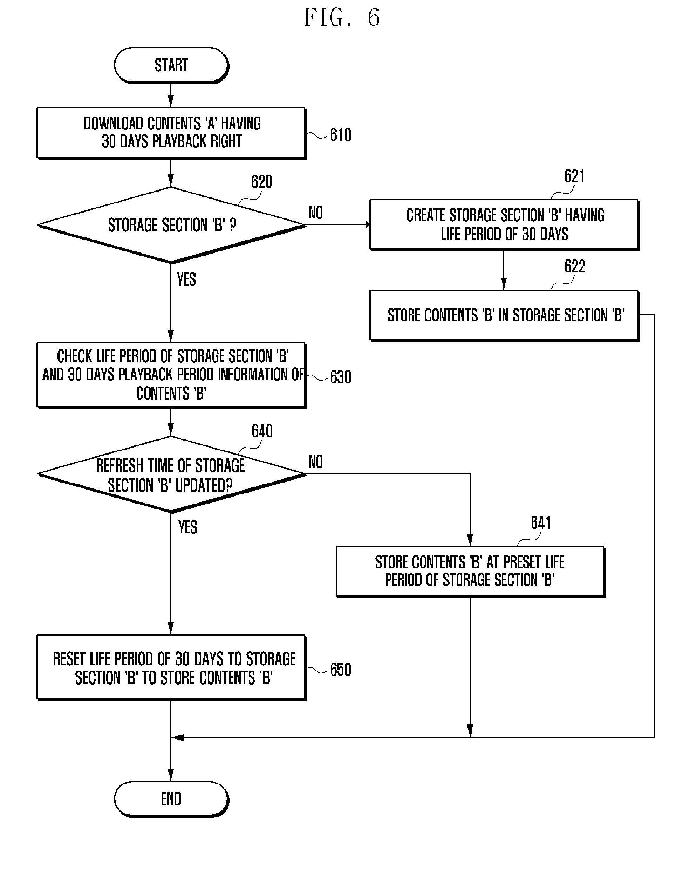

FIG. 6 is a flowchart illustrating a method of protecting and managing digital contents according to another exemplary embodiment of the present invention.

More particularly, FIG. 6 is a flowchart illustrating a method of managing storage and playback of digital contents having a predetermined playback period. Referring to FIG. 6, a controller 160 may receive contents 'B' through a corresponding network in response to a download request of contents from the user in step 610. In this case, the contents 'B' may be contents that have only a playback period of 30 days from a server providing corresponding contents. The controller 160 may extract 30 days playback right information from header information of contents 'B'.

The controller 160 may determine whether a storage section 'B' having a section ID corresponding to content 'B' is included in a second memory 150 in step 620. When the storage section'B' is not included in the second memory, the controller 160 creates a storage section 'B' in step 621. In this case, a life period of the storage section 'B' is set to have a life period of 30 days based on 30 days playback period information. If 30 days elapse after the corresponding storage section 'B' is created, the controller 160 may generate a refresh request signal indicating deletion of data stored in the storage section 'B'. The controller 160 stores the downloaded contents 'B' in the storage section 'B' in step 622.

When the storage section 'B' is included in the second memory 150, the controller 160 checks a life period of the created storage section 'B' and 30 days playback period information of the contents 'B' in step 630. The controller 160 may determine whether a refresh time of the storage section 'B' is updated in step 640. For example, when the refresh time due to a life period of the created storage section is different from a playback period of corresponding contents, the controller 160 may request update of the refresh time of the created storage section. When the refresh time due to a life period of the created storage section is equal to the playback period of corresponding contents, the controller 160 may not update the refresh time of the created storage section.

When the update of the refresh time of the storage section 'B' is not requested, the controller 160 stores the contents 'B' in the created storage section 'B' in step 641. In this case, the contents 'B' may be protected and managed during a preset life period of the storage section 'B'. For example, it is assumed that the refresh time of the storage section 'B' is 30 days. Since the playback period of the contents 'B' is 30 days and a refresh time of the storage section 'B' is 30 days later, a life period of the storage section 'B' is equal to a playback period of the contents 'B' to be stored, so that the controller 160 does not need to reset the life period of the storage section 'B'.

When the update of a refresh time of the storage section 'B' is requested, the controller 160 resets the preset life period of the storage section 'B' to store the contents 'B' in step 650. For example, it is assumed that a refresh time of the storage section 'B' is one day later. The controller 160 checks that a playback period of the contents 'B' is 30 days and the refresh time is one day later. In order to prevent data stored in the storage section 'B' from being deleted one day later, the controller 160 resets a life period of the storage section 'B' to 31 days based on a life period of the storage section 'B' and a remaining refresh time. As a result, the time of the storage section 'B' may be updated to 31 days later from one day later. Accordingly, the contents 'B' may be stored in the storage section 'B' for 31 days to be stored and protected.

As described above, according to the exemplary embodiment of the present invention, a contents protecting system capable of using and playing contents during a limited period using a volatile secure storage may be implemented without using a digital copyright management system using contents and right objects. Further, an exemplary embodiment of the present invention may extend a period capable of using contents by changing a playback period of the volatile secure storage.

According to an exemplary embodiment of the present invention, digital contents requiring security may be easily protected and may be played while limiting a use period without using an existing DRM system. Accordingly, the method and the apparatus according to an exemplary embodiment of the present invention can be used as a substitution technology for a technology of a DRM system in a digital contents market requiring security of the digital contents.

While the invention has been shown and described with reference to certain exemplary embodiments thereof, it will be understood by those skilled in the art that various changes in form and details may be made therein without departing from the spirit and scope of the present invention as defined by the appended claims and their equivalents.

## Claims

1. A method of protecting and managing digital contents, the method comprising:
receiving the digital contents;
determining whether the digital contents are secure contents whose use is limited; and
storing the secure contents in a secure memory which is refreshed at a life period of a predetermined period when the digital contents are the secure contents.

2. The method of claim 1, further comprising storing general contents whose use is not limited in a general memory having no life period when the digital contents are the general contents.

3. The method of claim 1, wherein the determining of whether the digital contents are secure contents comprises:
extracting header information of the received digital contents; and
determining corresponding digital contents as the secure contents when contents playback right information is included in the header information of the received digital contents.

4. The method of claim 1, wherein the storing of the secure contents in the secure memory comprises:
extracting an identification and playback right information of the secure contents;
determining whether a first storage section having a section identification corresponding to the identification of the secure contents is included in the secure memory;
when the first storage section having the section identification corresponding to the identification of the secure contents is not included in the secure memory, creating a second storage section corresponding to the identification of the secure contents, and storing the secure contents in the created second storage section; and
when the first storage section having the section identification corresponding to the identification of the secure contents is included in the secure memory, storing the secure contents in the first storage section.

5. The method of claim 1, wherein the storing of the secure contents in the secure memory comprises: storing the secure contents in a storage section having a section identification corresponding to an identification of the secure contents, wherein data stored in the storage section is deleted according to a refresh request signal.

6. The method of claim 5, further comprising
checking a life period of the storage section;
generating a refresh signal requesting deletion of the digital contents stored in the storage section when the life period of the storage section is terminated;
determining whether the digital contents stored in the storage section are played when the refresh signal is generated;
deleting the stored digital contents in response to the refresh signal when the stored digital contents is not played; and
deleting the stored digital contents in response to the refresh signal in a point of time when the playback of the digital contents is terminated when the stored digital contents is played.

7. The method of claim 4, wherein the storing of the secure contents in the created second storage section comprises:
checking a life period of the created second storage section and a playback period of the secure contents;
determining whether a refresh time of the created second storage section is updated;
resetting a life period of the first storage section and storing the secure contents when a refresh time due to the life period of the created second storage section is different from a playback period of corresponding digital contents; and
storing the secure contents in the first storage section when the refresh time due to the life period of the created second storage section is equal to the playback period of corresponding digital contents.

8. An apparatus for protecting and managing digital contents, the apparatus comprising:
a radio frequency communication unit processing transceiving of the digital contents and data associated with contents related information;
a secure memory storing secure contents whose use is limited among the digital contents;
a general memory storing general contents whose use is not limited among the digital contents and life period information of the secure memory; and
a controller determining whether the digital contents is the secure contents or the general contents, acquiring playback right information of the secure contents, creating a storage section in which the secure contents is stored in the secure memory based on the playback right information, and managing a life period of the storage section.

9. The apparatus of claim 8, wherein the secure memory comprises a function of deleting data stored in the secure memory when a predetermined time elapses or a specific situation occurs, a function incapable of copying data stored in the secure memory, a function capable of changing the life period of the secure contents, and a function of deleting the secure contents in a point of time when playback of the secure contents stored in the secure memory is terminated when the secure contents is played.

10. The apparatus of claim 8, wherein the secure memory comprises one or more storage sections having a section identification corresponding to an identification of the secure contents.

11. The apparatus of claim 8, wherein the controller determines the digital contents as the secure contents when there is use limitation right information from header information of the digital contents, and determines the digital contents as the general contents when there is no use limitation right information from the header information of the digital contents.

12. The apparatus of claim 8, wherein the controller determines whether a first storage section having a section identification corresponding to the identification of the secure contents is included in the secure memory, creates a second storage section corresponding to the identification of the secure contents when the first storage section having a section identification corresponding to the identification of the secure contents is not included in the secure memory, stores the secure contents in the created second storage section, and stores the secure contents in the first storage section when the first storage section having the section identification corresponding to the identification of the secure contents is included in the secure memory.

13. The apparatus of claim 8, wherein the controller generates a refresh request signal when the life period of the storage section is terminated, and deletes the digital contents stored in the storage section in response to the refresh request signal.

14. The apparatus of claim 8, wherein the controller generates a refresh request signal when the life period of the storage section is terminated, determines whether the secure contents stored in the storage section is played when the refresh signal is generated, deletes the stored secure contents in response to the refresh signal when the stored secure contents is not played, and deletes the stored secure contents in response to the refresh signal in a time point when the playback of the stored secure contents is terminated when the stored secure contents is played.

15. The apparatus of claim 8, wherein the controller checks a life period of the created second storage section and a playback period of the secure contents from the secure memory, determines whether a refresh time of the created second storage section is updated, resets a life period of the first storage section and storing the secure contents when a refresh time due to the life period of the created second storage section is different from a playback period of corresponding digital contents.
